# EUROPEAN PATENT SPECIFICATION

(11) **EP 3 798 126 B1**
(45) Date of publication and mention of the grant of the patent: **08.01.2025**
(21) Application number: 19382823.3
(22) Date of filing: 25.09.2019
(51) Int. Cl.: B64D 15/20, B64D 47/02, B64D 47/04, G08B 19/02

(54) **LIGHTING SYSTEM FOR AN AIRCRAFT**
BELEUCHTUNGSSYSTEM FÜR EIN FLUGZEUG
SYSTÈME D'ÉCLAIRAGE POUR AÉRONEF

(43) Date of publication of application: 31.03.2021
(73) Proprietor: Airbus Operations, S.L.U., 28906 Getafe (Madrid) (ES)
(72) Inventor: CUETO GÓMEZ, Pablo, E-28906 Getafe, Madrid (ES)
(74) Representative: ABG Intellectual Property Law, S.L.

(56) References cited:
- EP-A1- 1 027 249
- EP-B1- 1 027 249
- WO-A1-2018/091901
- CN-A- 108 128 468
- CN-U- 207 599 473
- US-A- 5 354 015
- US-A- 5 727 863
- US-A1- 2011 164 429
- "Code of Federal Regulations (US) - Title 14 - Aeronautics and Space; Chapter I - FEDERAL AVIATION ADMINISTRATION, DEPARTMENT OF TRANSPORTATION; Subchapter C - AIRCRAFT; Part 25 - AIRWORTHINESS STANDARDS: TRANSPORT CATEGORY AIRPLANES; Subpart F - Equipment; Subjgrp - Lights; Section 25.1401 - Anticol", 1 January 2012 (2012-01-01), pages 25 - 27, XP055165013, Retrieved from the Internet <URL:http://www.gpo.gov/fdsys/pkg/CFR-2012-title14-vol1/pdf/CFR-2012-title14-vol1-sec25-1401.pdf> [retrieved on 20150127]

## Description

### TECHNICAL FIELD OF THE INVENTION

The present invention belongs to the field of lighting systems in the aircraft industry. In particular, the present invention provides an aircraft comprising a lighting system for illuminating different areas and surfaces of the aircraft using a single light source.

This invention likewise relates to the field of monitoring ice accretion on a surface of an aircraft. In particular, the present invention provides a system and a method which allow monitoring ice accretion with a lighting system and imaging technology.

### BACKGROUND OF THE INVENTION

In the aeronautic industry, aircrafts are conceived for operating regardless of the environmental weather and light conditions when they are operating either on the ground or in flight. Therefore, aircrafts are provided with a great number of sources of light which are part of complex lighting systems distributed around their external surface as well as in different points of internal surfaces for performing different functionalities.

In this sense, an aircraft can be provided with several lighting systems regarding functionalities such as illuminating the cargo bay and loading area, scanning the wing and the nacelles, or providing visual indication of an emergency situation (Glide Emergency Light).

Normally, the presence of several dedicated light sources is required for performing each of these functionalities. This involves having a high number and complexity of the lighting systems as well as the implementation of subsidiary equipment required for the operation of said sources of light. Accordingly, elements such as harnesses, connectors or power sources must be taken into account when designing the illumination scheme of an aircraft.

Therefore, the presence of all these elements associated to each lighting system implies paying a penalty in terms of weight, power consumption, electrical noise, engineering complexity, manufacturing and maintenance costs and hours, what is of special relevance when implementing lighting systems in the fuselage. Document US 5 727 863 A discloses an aircraft wing inspection light system used to illuminate an aircraft's wing to permit ice detection from inside the cabin. CN207599473U discloses another aircraft wing inspection light system.

### SUMMARY OF THE INVENTION

The present invention provides a solution for the aforementioned problems, by an aircraft according to claim 1 and a method according to claim 7. In dependent claims, preferred embodiments of the invention are defined.

In a first inventive aspect, the invention provides an aircraft comprising a lighting system, the lighting system comprising:
- a light source configured to emit light,
- at least one refractive optical element;

wherein the at least one refractive optical element is configured for receiving light from the light source and for redirecting the light received from the light source to produce a plurality of light beams for illuminating simultaneously different surfaces of the aircraft and/or areas surrounding the aircraft;
wherein the lighting system is installed in the fuselage of the aircraft;
wherein at least one refractive optical element is a single complex lens comprising a light reception side and a light emitting side, wherein the light reception side comprises:
   - a planar surface configured to let the part of the received light pass through the lens towards the light emitting side without modifying its direction; and
   - a plurality of lobes configured to gather and focus part of the received light in a particular direction towards the light emitting side;
wherein the light emitting side is a flat surface and wherein the planar surface is parallel to the light emitting side.

Through all the text, this configuration which allows the production of multiple light beams for illuminating simultaneously different areas and surfaces around an aircraft, using a single light source, will be referred to as a "multichannel" concept.

Advantageously, the lighting system of the present invention only requires a single light source and a single refractive optical element to create a plurality of light beams. This way, the lighting system allows illuminating simultaneously different surfaces of the aircraft and/or areas surrounding the aircraft, in particular when the aircraft is on the ground.

The low number of elements which are part of the lighting system can be integrated into a compact module, which results in a simpler design of illumination schemes, also providing great versatility when dealing with the restrictive space and geometric requirements which illumination schemes are subjected to. Therefore, a lighting system according to the present invention provided with said compact configuration allows easy and simple implementation of the system in a desired location of the fuselage, even in those locations disregarded by traditional lighting schemes due to the penalty associated to the high number of elements such as harnesses, connectors or power sources that must be dealt with when designing the illumination scheme of an aircraft.

Further, a plurality of lighting systems according to the present invention can be installed in strategic locations on one or both sides of the fuselage according to the illumination scheme required.

Therefore, and advantageously, an embodiment of the lighting system can be set to illuminate simultaneously at least two of the following: a wing, a nacelle/engine, the horizontal tail plane, the vertical tail plane, the cargo and/or loading areas when the aircraft is on the ground, etc.

Consequently, the present invention provides a reliable and versatile lighting system that may be used to illuminate any surface of the aircraft, so that the crew/pilot can monitor the integrity of the aircraft even if it is operating under low visibility conditions. Therefore, the crew/pilot can react promptly to any anomaly that may occur, such as ice accretion on the aircraft surfaces.

Therefore, the lighting system according to the invention allows using a single light source to illuminate different locations of an aircraft simultaneously, thus reducing the number of external light sources along the aircraft fuselage.

The lighting systems integration in the aircraft is therefore simple. This results in weight and space saving and also in simpler requirements for the fuselage design, since less installation provisions for external light sources are required. Additionally, manufacturing and maintenance costs and electrical power consumption associated to external illumination are also reduced.

In a particular embodiment the lighting system further comprises at least one optical guide element configured for creating at least one optical channel from the light source to the at least one refractive optical element.

In a more particular embodiment, the optical guide element is a waveguide, whose architecture is designed to define and control the amount of light received by the refractive optical element. Some examples of elements which the waveguide may comprise, alone or in combination, are the following: fiberglass, collimators, reflectors, free-space optics.

In a particular embodiment, the light source comprises at least one LED, preferably at least one high intensity LED. In a preferred embodiment the light source comprises a plurality of LEDs, more preferably a plurality of high intensity LEDs. In a more preferred embodiment, the plurality of LEDs can be controlled individually and/or in groups so that any number of the plurality of LEDs are activated to illuminate at the same time. In some embodiments, the plurality of light sources - such as LEDs for example - can be actuated individually and/or in groups so that any number of the plurality of light sources may be oriented individually and/or in groups.

In a particular embodiment, the at least one refractive optical element comprises at least one multichannel lens. A multichannel lens is to be understood as a lens which upon receipt of light redirects said light creating several light beams. According to the claimed invention, at least one refractive optical element is a multichannel lens, wherein the multichannel lens is a single complex lens which comprises a light reception side, and a light emitting side. In particular, the multichannel lens may be shaped comprising a plurality of geometries in the light reception side. A planar surface and lobes are provided in the light reception side. Lobes are regarded as curved or rounded projections. Planar surfaces are configured to let the part of the received light pass through the lens towards the light emitting side without modifying its direction. Each lobe is configured to gather and focus part of the received light in a particular direction towards the light emitting side, so as to form a plurality of light beams.

The spatial distribution of the planar surfaces and lobes within a multichannel lens can also be shaped according to a plurality of geometries. This is, for a given volume of a multichannel lens, the different lobes and planar surfaces may be disposed at different geometric planes of the multichannel lens.

In a further particular embodiment, the light emitting side is shaped to match with the outer surface of the part of the fuselage where the lighting system is located. Preferably, the emitting side of the multichannel lens levels with said outer surface, thus providing structural and aerodynamic continuity, preventing the generation of additional drag.

Advantageously, the compact configuration of the lighting system, along with its multichannel capabilities using a single light source and a lens for emitting different light beams, allows minimizing the space required to fulfil the functionalities which, in the current aircraft industry, would have required several dedicated systems. Therefore, the total weight is also reduced.

In an embodiment the lighting system is installed at one side of the fuselage of the aircraft.

In a more particular embodiment, the lighting system is located between the leading edge of the wing and the cockpit.

In a more particular embodiment, the lighting system is located above the extrados of the wing.

In a particular embodiment, at least one lighting system is installed in each side of the fuselage of the aircraft.

In a more particular embodiment, the lighting system is located between the leading edge of the wing and the cockpit, and above the extrados of the wing.

Advantageously, a lighting system installed according to this particular embodiment can perform different functionalities. In particular, the aircraft will be provided with lighting capabilities which encompass: illuminating ground areas around the aircraft when it is on the ground or close to the ground; illuminating a nacelle/engine, as well as a wing of the aircraft, so that said areas/surfaces can be monitored by the crew/pilot in prevention of any anomaly that may occur.

In a particular embodiment, the aircraft further comprises:
- thermal sensing means configured for acquiring thermal information of a surface of the aircraft, and
- a controller, wherein
   the thermal sensing means is configured for providing the controller with a data signal comprising thermal information of the surface of the aircraft,
   the controller is further configured for processing the data signal received from the thermal imaging means to determine the presence of ice on the surface of the aircraft, and wherein
   the controller is further configured for controlling the lighting system such that the lighting system is activated for illuminating the surface of the aircraft upon determination of the presence of ice on the surface of the aircraft.

In a particular embodiment, the aircraft further comprises imaging means configured for capturing visual information of the surface of the aircraft.

In a particular embodiment, the aircraft further comprises displaying means, wherein the controller is further configured for providing the displaying means with a signal comprising the visual information captured by the imaging means, preferably upon determination of the presence of ice on the surface of the aircraft.

In a particular embodiment, the displaying means is located in the cockpit of the aircraft.

In a particular embodiment, the displaying means are located in the cabin of the aircraft, thus allowing the crew to be aware of an anomaly, such as ice accretion.

In a more particular embodiment, the displaying means in the cockpit and/or cabin of the aircraft is a screen.

Advantageously, the lighting system and the imaging means provide visual access to a surface of the aircraft, regardless of the visibility conditions (fog, night-time) under which the aircraft is operating. Therefore, the pilot/crew can check the status of a surface in any situation.

In this sense, the pilot/crew is provided with instant visual information in the event of willing to check the integrity of said surface due to a regular inspection or upon identification of any anomaly, such as impacts with foreign object debris or birds; dust accumulation due to flying through ash clouds; or fire in the engines.

Advantageously, upon determination of the presence of ice on a surface of the aircraft after processing the data signal provided by the thermal sensing means, the controller is configured for automatically activating the lighting system as well as for sending visual information to the displaying means, so that the pilot/crew is aware of the hazardous situation.

In a second inventive aspect the invention provides a method for monitoring the presence of ice on a surface of an aircraft, wherein the aircraft comprises:
- thermal sensing means configured for acquiring thermal information of a surface of the aircraft, and
- a controller,

wherein the thermal sensing means is configured for providing the controller with a data signal comprising thermal information of the surface of the aircraft,
wherein the controller is further configured for processing the data signal received from the thermal sensing means to determine the presence of ice on the surface of the aircraft, and
wherein the controller is further configured for controlling the lighting system such that the lighting system is activated for illuminating at least part of the surface of the aircraft upon determination of the presence of ice on the surface of the aircraft;
wherein the lighting system, the thermal sensing means and the controller are part of an ice monitoring system;
wherein the method comprises the steps of:
   - obtaining thermal information of the surface of the aircraft;
   - generating a data signal comprising thermal information of the surface of the aircraft;
   - processing the data signal comprising thermal information of the surface of the aircraft;
   - determining the presence of ice on the surface of the aircraft;
   - illuminating the surface of the aircraft, upon determination of the presence of ice on the surface of the aircraft;
wherein the method is performed by the ice monitoring system.

In a particular embodiment, the method further comprises the step of illuminating the surface of the aircraft.

Advantageously, the method according to the present invention allows monitoring of a surface of the aircraft in anticipation of the formation of ice on said surface.

The method can be applied to monitor any of the aircraft external surfaces, such as a wing, a nacelle/engine, the horizontal tail plane, the vertical tail plane, the cargo and/or loading areas when the aircraft is on the ground, etc.

Consequently, the present invention provides a reliable and versatile method that may be applied for monitoring and illumination of any surface of the aircraft, so that the crew/pilot can monitor the integrity of the aircraft even if it is operating under low visibility conditions. Therefore, the crew/pilot can react promptly to any anomaly that may occur, such as ice accretion on the aircraft surfaces.

In a particular embodiment, the method further comprises the step of capturing visual information of the surface of the aircraft.

In a more particular embodiment, the method further comprises the step of displaying on a screen visual information of the surface of the aircraft.

In a particular embodiment, the step of capturing visual information of the surface of the aircraft is performed while illuminating the surface of the aircraft.

In a particular embodiment, the surface of the aircraft is the surface of the wing and/or the surface of the nacelle, and/or the surface of the vertical tail plane, and/or the surface of the horizontal tail plane.

In a third aspect not covered by the claims, the present disclosure provides a lighting system for an aircraft,
the lighting system comprising:
   - a light source configured to emit light,
   - at least one refractive optical element, wherein
the at least one refractive optical element is configured for receiving light from the light source and for redirecting the light received from the light source to produce a plurality of light beams.

In a fourth aspect not covered by the claims, the present disclosure provides an ice monitoring system for an aircraft, the ice monitoring system comprising:
- a lighting system according to the third aspect
- thermal sensing means configured for acquiring thermal information of a surface of the aircraft, and
- a controller, wherein

the thermal sensing means is configured for providing the controller with a data signal comprising thermal information of the surface of the aircraft,
the controller is configured for processing the data signal received from the thermal sensing means to determine the presence of ice on the surface of the aircraft, and wherein
the controller is further configured for controlling the lighting system such that the lighting system is activated for illuminating the surface of the aircraft upon determination of the presence of ice on the surface of the aircraft.

Ice accretion on aerodynamic surfaces is a problem of especial relevance in the aircraft industry, as it can contribute to flow separation, and, therefore to a reduced performance, loss of lift, altered controllability and even stall and subsequent loss of control of the aircraft.

In addition, due to the poor visibility conditions in which aircrafts operate, especially at night-time, it is difficult for the crew to detect if ice is accumulating, for example, on the wing.

The thermal sensing means can gather thermal information of a surface of the aircraft, wherein said information may comprise the temperature, the emissivity, reflectivity, transmittance, absorption of incident light, or any other parameter that may serve to detect the presence of ice on said surface.

Advantageously, upon detection of ice on a surface of the aircraft by means of the thermal sensing means, the ice monitoring system can illuminate the targeted area by means of the lighting system, so that the crew/pilot is aware of the situation, and can visually assess said situation. Further advantageously, the thermal sensing means may allow the detection of other thermal-related anomalies, such as fire in the engines.

The thermal sensing means may alternatively be replaced or combined with any other type of ice sensing means.

The monitoring system may further comprise imaging means configured for capturing visual information of the surface of the aircraft.

The imaging means may be configured for providing the controller with a data signal comprising visual information of the surface of the aircraft.

Advantageously, the ice monitoring system allows live monitoring of ice formation on the surface of the aircraft, thus resulting in increased safety and without the need of additional assistance from crew.

The ice monitoring system may further comprise displaying means, wherein the controller is further configured for providing the displaying means with the signal comprising the visual information captured by the imaging means upon determination of the presence of ice on the surface of the aircraft.

In a particular embodiment the thermal sensing means may comprise an infrared (IR) camera.

The thermal sensing means may comprise an IR photosensor for ice detection in the infrared spectrum. Since there is a fundamental relationship among emissivity, reflectivity, transmittance, and the absorption of incident light, the IR photosensor can detect a thermal difference between the exposed ice and the surrounding surface, and a difference in emissivity between the two surfaces.

Advantageously, this ice monitoring can operate under fog and night-time conditions.

In an additional aspect not covered by the claims, an anomaly inspection system for a surface of an aircraft is provided,
the system comprising:
   - a lighting system,
   - imaging means configured for capturing visual information of the surface of the aircraft,
   - displaying means,
   - a controller, wherein
the imaging means is configured for providing the controller with a data signal comprising visual information of the surface of the aircraft,
the controller is configured for providing the displaying means with the signal comprising visual information captured by the imaging means.

The lighting system may be a lighting system according to the third aspect

The displaying means may be located in the cockpit and/or in the cabin of the aircraft, thus allowing the pilot/crew to be aware of an anomaly or emergency situation that could occur in a surface of the aircraft such as the wing, the nacelle, the horizontal tail plane or the vertical tail plane.

The displaying means in the cockpit and/or cabin of the aircraft may be a screen.

Advantageously, the lighting system and the imaging means provide visual access to one or several regions of the aircraft, regardless of the visibility conditions (fog, night-time) under which the aircraft is operating. Therefore, the pilot/crew can check the status of a surface in any situation.

In this sense, the pilot/crew is provided with instant visual information in the event of willing to check the integrity of said surface due to a regular inspection or upon identification of any anomaly, such as impacts with foreign object debris or birds; dust accumulation due to flying through ash clouds; or fire in the engines.

In an additional aspect not covered by the claims,
the present disclosure provides an ice monitoring system for an aircraft, the ice monitoring system comprising:
   - a lighting system,
   - thermal sensing means configured for acquiring thermal information of a surface of the aircraft, and
   - a controller, wherein
the thermal sensing means is configured for providing the controller with a data signal comprising thermal information of the surface of the aircraft,
the controller is configured for processing the data signal received from the thermal sensing means to determine the presence of ice on the surface of the aircraft, and wherein
the controller is further configured for controlling the lighting system such that the lighting system is activated for illuminating the surface of the aircraft upon determination of the presence of ice on the surface of the aircraft.

In a fifth aspect not covered by the claims, the present disclosure provides a method for monitoring the presence of ice on a surface of an aircraft comprising the steps of:
- obtaining thermal information of the surface of the;
- generating a data signal comprising thermal information of the surface of the aircraft;
- processing the data signal comprising thermal information of the surface of the aircraft;
- determining the presence of ice on the surface of the aircraft;
- illuminating the surface of the aircraft, upon determination of the presence of ice.

The steps of the method may be carried out by an ice monitoring system according to the fourth aspect

All the features described in this specification (including the claims, description and drawings) and/or all the steps of the described method can be combined in any combination, with the exception of combinations of such mutually exclusive features and/or steps.

### DESCRIPTION OF THE DRAWINGS

These and other characteristics and advantages of the invention will become clearly understood in view of the detailed description of the invention which becomes apparent from a preferred embodiment of the invention, given just as an example and not being limited thereto, with reference to the drawings.
- Figure 1: This figure shows a schematic representation of the operation principle of a lighting system according to the invention.
- Figure 2: This figure shows a top plan view of an aircraft comprising a lighting system according to an embodiment of the present invention.
- Figure 3: This figure shows a schematic representation of an ice monitoring system according to an embodiment of the present invention, wherein the system is monitoring a nacelle of an aircraft.
- Figure 4: This figure shows an aircraft comprising a lighting system according to an embodiment of the present invention.

### DETAILED DESCRIPTION OF THE INVENTION

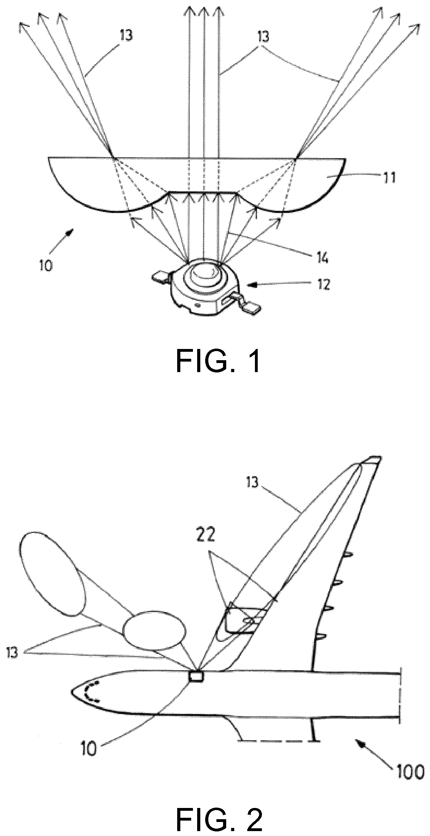

Figure 1 schematically illustrates how the main elements of a lighting system (10) according to the present invention are related. In particular, figure 1 shows a single light source (12) which is emitting a diverging light beam (14), this is, in many directions from the surface of the light source (12).

The light (14) emitted by the light source (12) is depicted as several oblique straight arrows pointing towards a refractive optical element (11). In particular, figure 1 shows a multichannel lens (11) which is receiving the diverging light beam (14) emitted by the light source (12), said diverging light beam being received by the light reception side of the multichannel lens (11).

The reception side of the multichannel lens (11) is shaped for gathering and redirecting the light received from the light source (12) to produce a plurality of light beams (13) which are emitted from the light emitting side of the multichannel lens (11) in a plurality of directions.

In this embodiment, said light emitting side is shown as a flat surface of the multichannel lens (11) from which three light beams (13), created by the multichannel lens (11) from the received light, are emitted.

In particular, in this embodiment, the light reception side of the multichannel lens (11) comprises two lobes shaped as curved surfaces, and separated by a planar surface which is parallel to the light emitting side of the multichannel lens (11).

Part of the diverging light beam emitted by the single light source (12) is received by the curved surfaces of the lens (11). Each curved surface gathers and focuses the received light in a particular direction towards the light emitting side, for further projection of a different light beam.

Further, part of the diverging light beam emitted by the single light source (12) is received by the planar surface which is parallel to the light emitting side. Then, the light travels in a perpendicular direction from the planar surface towards the light emitting side of the multichannel lens (11) and a light beam is then emitted from said emitting side of the multichannel lens (11).

Thus, the lighting system (10) according to this particular embodiment produces three light beams (13) in different directions suitable for illuminating different areas, using the light received from a single light source (12).

Although the figure 1 depicts a planar representation of an example of multichannel lens (11) creating and emitting three different light beams (13), as the surfaces and areas that require to be illuminated may be located at different heights, the multichannel lens (11) light reception side may be configured in order to satisfy these height requirements. Thus, the lobes and planar surfaces of the light reception side of the multichannel lens (11) are preferably shaped for redirecting the part of light received at different heights.

Other embodiments of multichannel lens according to the invention may comprise two, three or more portions so as to produce two, three or more light beams (13) from the light received from the light source. The multichannel lens may thus have different shapes or sizes, adapted to specific requirements.

Figure 2 shows a top plan view of an aircraft (100) provided with a lighting system (10) according to an embodiment of the present invention. In particular, the system (10) is located in the right side of the aircraft (100), mounted on the fuselage, forward of the leading edge of the wing, and above the root chord of the wing. The system (10) is shown in an operative mode, emitting three different light beams (13) which are depicted illuminating simultaneously three different areas of the surrounding airfield. One of the light beams (13) is represented illuminating two different surfaces (22) of the aircraft, namely an engine nacelle and the wing. The other two light beams (13) are depicted illuminating two different areas of the surroundings of the aircraft. In particular, those two illuminated areas provide the crew with better visibility conditions for operating when the aircraft is on the ground.

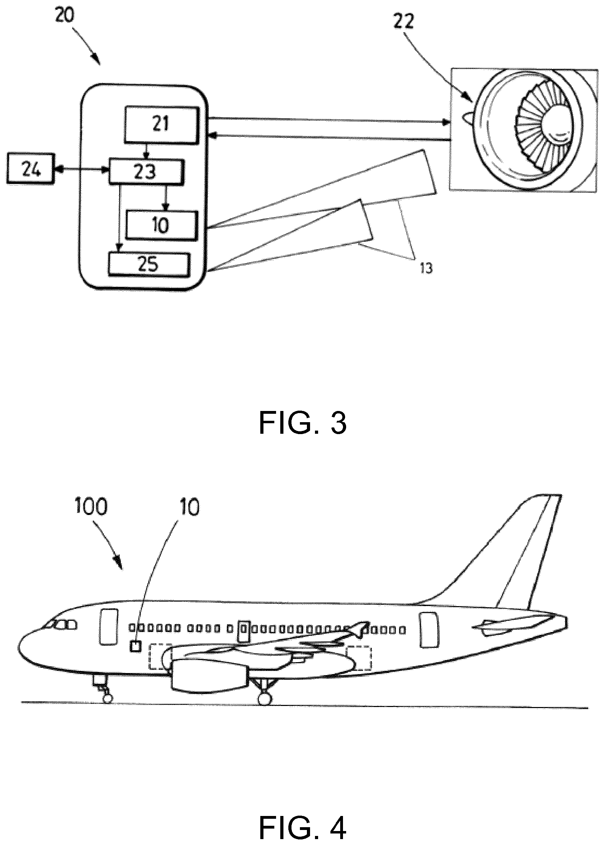

Figure 3 represents schematically a diagram showing how the elements of an ice monitoring system (20) according to an embodiment of the present invention are related. In particular, the system (20) comprises a thermal sensing means (21), a controller (23), a lighting system (10) according to an embodiment as disclosed herein, an imaging means (25) and a displaying means (24).

The system (20) is depicted monitoring an engine nacelle (22). In particular, according to the present embodiment, the thermal sensing means (21) is an IR camera (21) capturing thermal information of the engine nacelle (22). Said information is provided as a data signal to the controller (23) which, in turn, is configured for processing said data signal to determine if ice is accumulating on the engine nacelle (22).

Upon determination of ice accumulation on the engine nacelle (23), the controller is configured for turning the lighting system (10) into an operative mode wherein the system (10) illuminates the engine nacelle (22). Further to the activation of the lighting system (10), the controller (23) activates the imaging means (21). In this particular embodiment, the imaging means (21) is a video camera (21) configured for recording visual information of the engine nacelle (22). The video camera (21) provides said visual information as a data signal to the controller (23).

The controller (23) provides the visual information to a remote displaying means (24) which, in this particular embodiment, is a screen installed in the cockpit, for allowing the crew to monitor ice accumulation on the engine nacelle (22).

Figure 4 shows an aircraft (100) comprising a lighting system (10) according to the invention.

## Claims

1. Aircraft (100) comprising a lighting system (10), the lighting system (10) comprising:
- a light source (12) configured to emit light,
- at least one refractive optical element (11);
wherein the at least one refractive optical element (11) is configured for receiving light from the light source (12) and for redirecting the light received from the light source to produce a plurality of light beams (13) for illuminating simultaneously different surfaces of the aircraft (100) and/or areas surrounding the aircraft (100); wherein the lighting system (10) is installed in the fuselage of the aircraft (100); wherein at least one refractive optical element (11) is a single complex lens comprising a light reception side and a light emitting side, wherein the light reception side comprises:
- a planar surface configured to let part of the received light pass through the lens (11) towards the light emitting side without modifying its direction; and
- a plurality of lobes configured to gather and focus part of the received light in a particular direction towards the light emitting side;
wherein the light emitting side is a flat surface and wherein the planar surface is parallel to the light emitting side.

2. The aircraft (100) according to claim 1 further comprising:
- thermal sensing means (21) configured for acquiring thermal information of a surface (22) of the aircraft (100), and
- a controller (23), wherein
the thermal sensing means (21) is configured for providing the controller (23) with a data signal comprising thermal information of the surface (22) of the aircraft (100),
the controller is further configured for processing the data signal received from the thermal sensing means to determine the presence of ice on the surface (22) of the aircraft (100), and wherein
the controller is further configured for controlling the lighting system (10) such that the lighting system (10) is activated for illuminating at least part of the surface (22) of the aircraft (100) upon determination of the presence of ice on the surface (22) of the aircraft (100).

3. The aircraft (100) according to claim 2 further comprising imaging means (25) configured for capturing visual information of the surface (22) of the aircraft (100).

4. The aircraft (100) according to claim 3, further comprising displaying means (24), wherein the controller (23) is further configured for providing the displaying means (24) with a signal comprising the visual information captured by the imaging means (25) upon determination of the presence of ice on the surface (22) of the aircraft (100).

5. The aircraft (100) according to any of the previous claims, wherein the lighting system (10) further comprises at least one optical guide element configured for creating at least one optical channel from the light source (12) to the at least one refractive optical element (11).

6. The aircraft (100) according to any of the previous claims, wherein the light source (12) comprises at least one LED.

7. A method for monitoring the presence of ice on a surface (22) of an aircraft (100) according to claim 2 or any of the previous claims and claim 2, wherein the lighting system (10), the thermal sensing means (21) and the controller (23) are part of an ice monitoring system,
wherein the method comprises the steps of:
- obtaining thermal information of the surface (22) of the aircraft (100);
- generating a data signal comprising thermal information of the surface (22) of the aircraft (100);
- processing the data signal comprising thermal information of the surface (22) of the aircraft (100);
- determining the presence of ice on the surface of the aircraft (100);
- illuminating the surface (22) of the aircraft (100), upon determination of the presence of ice on the surface of the aircraft (100);
wherein the method is performed by the ice monitoring system.

8. The method according to claim 7 further comprising the steps of:
- capturing visual information of the surface (22) of the aircraft (100), and
- displaying on a screen visual information of the surface (22) of the aircraft (100).

## Patentansprüche

1. Luftfahrzeug (100), das ein Beleuchtungssystem (10) umfasst, wobei das Beleuchtungssystem (10) umfasst:
- eine Lichtquelle (12), die dazu ausgelegt ist, Licht zu emittieren,
- mindestens ein refraktives optisches Element (11); wobei das mindestens eine refraktive optische Element (11) zum Empfangen von Licht von der Lichtquelle (12) und zum Umleiten des von der Lichtquelle empfangenen Lichts ausgelegt ist, um eine Vielzahl von Lichtstrahlen (13) zur gleichzeitigen Beleuchtung unterschiedlicher Oberflächen des Luftfahrzeugs (100) und/oder Bereiche im Umfeld des Luftfahrzeugs (100) zu erzeugen;
wobei das Beleuchtungssystem (10) im Rumpf des Luftfahrzeugs (100) installiert ist;
wobei mindestens ein refraktives optisches Element (11) eine einzelne komplexe Linse ist, die eine Lichtempfangsseite und eine Lichtemissionsseite umfasst, wobei die Lichtempfangsseite umfasst:
- eine planare Oberfläche, die dazu ausgelegt ist, einen Teil des empfangenen Lichts durch die Linse (11) in Richtung der Lichtemissionsseite zu lassen, ohne seine Richtung zu modifizieren; und
- eine Vielzahl von Keulen, die dazu ausgelegt sind, einen Teil des empfangenen Lichts zu sammeln und in eine bestimmte Richtung zu der Lichtemissionsseite hin zu fokussieren;
wobei die Lichtemissionsseite eine flache Oberfläche ist und wobei die planare Oberfläche parallel zu der Lichtemissionsseite ist.

2. Luftfahrzeug (100) nach Anspruch 1, ferner umfassend:
- ein Wärmeerfassungsmittel (21), das zum Erfassen von Wärmeinformationen einer Oberfläche (22) des Luftfahrzeugs (100) ausgelegt ist, und
- eine Steuerung (23), wobei
das Wärmeerfassungsmittel (21) zum Versorgen der Steuerung (23) mit einem Datensignal ausgelegt ist, das Wärmeinformationen der Oberfläche (22) des Luftfahrzeugs (100) umfasst,
die Steuerung ferner zum Verarbeiten des vom Wärmeerfassungsmittel empfangenen Datensignals ausgelegt ist, um das Vorhandensein von Eis auf der Oberfläche (22) des Luftfahrzeugs (100) zu bestimmen, und wobei
die Steuerung ferner zum Steuern des Beleuchtungssystems (10) ausgelegt ist, sodass das Beleuchtungssystem (10) nach der Bestimmung des Vorhandenseins von Eis auf der Oberfläche (22) des Luftfahrzeugs (100) zur Beleuchtung zumindest eines Teils der Oberfläche (22) des Luftfahrzeugs (100) aktiviert wird.

3. Luftfahrzeug (100) nach Anspruch 2, ferner umfassend ein Bildgebungsmittel (25), das zum Aufnehmen visueller Informationen der Oberfläche (22) des Luftfahrzeugs (100) ausgelegt ist.

4. Luftfahrzeug (100) nach Anspruch 3, ferner umfassend ein Anzeigemittel (24), wobei die Steuerung (23) ferner zum Versorgen des Anzeigemittels (24) mit einem Signal, das die durch das Bildgebungsmittel (25) aufgenommenen visuellen Informationen umfasst, nach der Bestimmung des Vorhandenseins von Eis auf der Oberfläche (22) des Luftfahrzeugs (100) ausgelegt ist.

5. Luftfahrzeug (100) nach einem der vorstehenden Ansprüche, wobei das Beleuchtungssystem (10) ferner mindestens ein optisches Führungselement umfasst, das zum Erzeugen mindestens eines optischen Kanals von der Lichtquelle (12) zu dem mindestens einen refraktiven optischen Element (11) ausgelegt ist.

6. Luftfahrzeug (100) nach einem der vorstehenden Ansprüche, wobei die Lichtquelle (12) mindestens eine LED umfasst.

7. Verfahren zum Überwachen des Vorhandenseins von Eis auf einer Oberfläche (22) eines Luftfahrzeugs (100) nach Anspruch 2 oder einem der vorstehenden Ansprüche und Anspruch 2, wobei das Beleuchtungssystem (10), das Wärmeerfassungsmittel (21) und die Steuerung (23) Teil eines Eisüberwachungssystems sind,
wobei das Verfahren die folgenden Schritte umfasst:
- Erhalten von Wärmeinformationen der Oberfläche (22) des Luftfahrzeugs (100);
- Erzeugen eines Datensignals, das Wärmeinformationen der Oberfläche (22) des Luftfahrzeugs (100) umfasst;
- Verarbeiten des Datensignals, das Wärmeinformationen der Oberfläche (22) des Luftfahrzeugs (100) umfasst;
- Bestimmen des Vorhandenseins von Eis auf der Oberfläche des Luftfahrzeugs (100);
- Beleuchten der Oberfläche (22) des Luftfahrzeugs (100) nach der Bestimmung des Vorhandenseins von Eis auf der Oberfläche des Luftfahrzeugs (100);
wobei das Verfahren durch das Eisüberwachungssystem durchgeführt wird.

8. Verfahren nach Anspruch 7, ferner umfassend die folgenden Schritte:
- Aufnehmen visueller Informationen der Oberfläche (22) des Luftfahrzeugs (100), und
- Anzeigen visueller Informationen der Oberfläche (22) des Luftfahrzeugs (100) auf einem Bildschirm.

## Revendications

1. Aéronef (100) comprenant un système d'éclairage (10), le système d'éclairage (10) comprenant :
- une source de lumière (12) conçue pour émettre de la lumière,
- au moins un élément optique réfractif (11) ;
dans lequel l'au moins un élément optique réfractif (11) est conçu pour recevoir la lumière provenant de la source de lumière (12) et pour rediriger la lumière reçue depuis la source de lumière pour produire une pluralité de faisceaux lumineux (13) afin d'éclairer simultanément différentes surfaces de l'aéronef (100) et/ou des zones entourant l'aéronef (100) ;
dans lequel le système d'éclairage (10) est installé dans le fuselage de l'aéronef (100) ;
dans lequel au moins un élément optique réfractif (11) est une unique lentille complexe comprenant un côté réception de lumière et un côté émission de lumière, le côté réception de lumière comprenant :
- une surface plane conçue pour laisser passer une partie de la lumière reçue à travers la lentille (11) vers le côté émission de lumière sans modifier sa direction ; et
- une pluralité de lobes conçus pour récolter et focaliser une partie de la lumière reçue dans une direction particulière vers le côté émission de lumière ; dans lequel le côté émission de lumière est une surface plate et dans lequel la surface plane est parallèle au côté émission de lumière.

2. Aéronef (100) selon la revendication 1 comprenant en outre :
- un moyen de détection thermique (21) conçu pour acquérir des informations thermiques d'une surface (22) de l'aéronef (100), et
- un contrôleur (23), dans lequel
le moyen de détection thermique (21) est conçu pour fournir au contrôleur (23) un signal de données comprenant les informations thermiques de la surface (22) de l'aéronef (100),
le contrôleur est également conçu pour traiter le signal de données reçu depuis le moyen de détection thermique pour déterminer la présence de givre sur la surface (22) de l'aéronef (100), et dans lequel
le contrôleur est également conçu pour contrôler le système d'éclairage (10) de telle sorte que le système d'éclairage (10) est activé pour éclairer au moins une partie de la surface (22) de l'aéronef (100) lors de la détermination de la présence de givre sur la surface (22) de l'aéronef (100).

3. Aéronef (100) selon la revendication 2 comprenant en outre un moyen d'imagerie (25) conçu pour capturer des informations visuelles de la surface (22) de l'aéronef (100) .

4. Aéronef (100) selon la revendication 3, comprenant en outre un moyen d'affichage (24), dans lequel le contrôleur (23) est également conçu pour fournir au moyen d'affichage (24) un signal comprenant les informations visuelles capturées par le moyen d'imagerie (25) lors de la détermination de la présence de givre sur la surface (22) de l'aéronef (100).

5. Aéronef (100) selon l'une quelconque des revendications précédentes, dans lequel le système d'éclairage (10) comprend en outre au moins un élément faisant guide optique conçu pour créer au moins un canal optique allant de la source de lumière (12) à l'au moins un élément optique réfractif (11).

6. Aéronef (100) selon l'une quelconque des revendications précédentes, dans lequel la source de lumière (12) comprend au moins une LED.

7. Procédé destiné à surveiller la présence de givre sur une surface (22) d'un aéronef (100) selon la revendication 2 ou l'une quelconque des revendications précédentes et la revendication 2, dans lequel le système d'éclairage (10), le moyen de détection thermique (21) et le contrôleur (23) font partie d'un système de surveillance de givre,
le procédé comprenant les étapes suivantes :
- obtention d'informations thermiques de la surface (22) de l'aéronef (100) ;
- génération d'un signal de données comprenant les informations thermiques de la surface (22) de l'aéronef (100) ;
- traitement du signal de données comprenant les informations thermiques de la surface (22) de l'aéronef (100) ;
- détermination de la présence de givre sur la surface de l'aéronef (100) ;
- éclairage de la surface (22) de l'aéronef (100) lors de la détermination de la présence de givre sur la surface de l'aéronef (100) ;
le procédé étant effectué par le système de surveillance de givre.

8. Procédé selon la revendication 7 comprenant en outre les étapes suivantes :
- capture d'informations visuelles de la surface (22) de l'aéronef (100), et
- affichage sur un écran des informations visuelles de la surface (22) de l'aéronef (100).
